# EUROPÄISCHE PATENTANMELDUNG

(11) **EP 0 692 331 A2**
(43) Veröffentlichungstag der Anmeldung: **17.01.1996**
(21) Anmeldenummer: 95109490.3
(22) Anmeldetag: 20.06.1995
(51) Int. Cl.: B23B 31/40, B25B 5/14

(54) **Spannvorrichtung**

(30) Priorität: 24.06.1994 DE 9410032 U
(71) Anmelder: CONTIPOLE Aluminium-Verarbeitungsgesellschaft m.b.H., A-4843 Ampflwang (AT)
(72) Erfinder: Weichhart, Peter, A-4800 Attnang-Puchheim (AT)
(74) Vertreter: Brose, D. Karl, Dipl.-Ing.

(57) **Zusammenfassung**

Spannvorrichtung für röhrenförmige Rohlinge, die mit einer Zugkraft beaufschlagt werden sollen, mit Spannbacken (20, 22, 24), die den röhrenförmigen Rohling von innen her festspannen, wobei die Spannbacken (20, 22, 24) mit einer entsprechenden Expandiervorrichtung verbunden sind. Die Spannbacken (20, 22, 24) können dabei auf einem Spannbackenträger (14) angeordnet sein, der durch in Axialrichtung verlaufende Schlitze (16, 18) in einzelne, an einem Ende verbundene Sektoren geteilt ist, die an dem anderen Ende die Spannbacken (20, 22, 24) tragen. Diese Vorrichtung vermeidet Beschädigungen des Rohlings beim Einspannen und erlaubt eine Bearbeitung des Rohlings über die ganze Länge.

## Beschreibung

Die vorliegende Erfindung betrifft eine Spannvorrichtung für röhrenförmige Rohlinge, die mit einer Zugkraft beaufschlagt werden sollen.

Gemäß dem Stand der Technik wurden röhrenförmige Rohlinge, die bei der Bearbeitung mit einer Zugkraft beaufschlagt werden sollten, üblicherweise von außen eingespannt. Dadurch wurde zwangsläufig ein Stück des Rohlings gequetscht, so daß es nicht mehr verwendbar war. Darüber hinaus war eine Bearbeitung über die gesamte Länge des Rohlings nicht möglich. Das gequetschte Stück des Rohlings bedeutete zum einen einen Materialverlust, zum anderen einen zusätzlichen Arbeitsgang für das Abschneiden des gequetschten und unbearbeiteten Stücks des Rohlings.

Es ist daher Aufgabe der vorliegenden Erfindung, eine Spannvorrichtung für röhrenförmige Rohlinge zu schaffen, die den Rohling beim Einspannen nicht beschädigt und eine Bearbeitung des Rohlings über die ganze Länge erlaubt.

Erfindungsgemäß wird diese Aufgabe dadurch gelöst, daß die Spannvorrichtung Spannbacken aufweist, die den röhrenförmigen Rohling von innen her festspannen, wobei die Spannbacken mit einer entsprechenden Expandiervorrichtung verbunden sind.

Als konstruktiv besonders vorteilhaft erweist sich eine Ausführungsform, bei der die Spannbacken auf einem Spannbackenträger angeordnet sind, der durch in Axialrichtung verlaufende Schlitze in einzelne, an einem Ende verbundene Sektoren geteilt ist, die an dem anderen Ende die Spannbacken tragen.

Eine besonders einfache und praktische Spannvorrichtung ist dadurch gekennzeichnet, daß die Sektoren an dem Ende, an dem sie die Spannbacken tragen, an ihrer Innenseite nach innen konisch zulaufend ausgebildet sind, und als Expandiervorrichtung ein Kegel mit gleicher Konizität dient, der mit seiner Spitze mit der die Zugkraft erzeugende Vorrichtung in Verbindung steht, und dessen Spitze in den zwischen den Sektoren gebildeten Hohlraum hineinragt. Auf diese Weise wird die Vorrichtung selbstspannend, d.h. solange keine Zugkraft auf der Spannvorrichtung ruht, sind die Spannbacken in Ruhestellung und können problemlos in die Öffnung des Rohlings eingeführt werden. Sobald ein Zug auf den Rohling ausgeübt wird, läuft die entsprechende Zugkraft über den Kegel, der die Spanngbacken automatisch mit einer entsprechenden Kraft festspannt. Diese Vorrichtung hat darüber hinaus den Vorteil, daß sie sich leicht unterschiedlichen Durchmessern der Rohlinge anpassen kann. Insbesondere ist dies von Vorteil, wenn die Rohlinge an dem gespannten Ende bearbeitet werden sollen. Bei einem eventuellen Walz- oder Ziehvorgang geben die Spannbacken problemlos nach, obwohl der Rohling weiterhin mit der gleichen Kraft gespannt bleibt. Besonders bevorzugt ist es, den Spannbackenträger drehbar und verschiebbar auf der Verbindung zwischen dem Kegel und der die Zugkraft erzeugenden Vorrichtung anzuordnen. Dadurch kann die Spannvorrichtung besonders leicht an einem zu bearbeitenden Rohling angebracht werden.

Sofern der Rohling während der Bearbeitung oder zwischen einzelnen Bearbeitungsschritten gedreht werden soll, ist es besonders bevorzugt, den Kegel gegenüber der die Zugkraft erzeugenden Vorrichtung drehbar zu lagern.

Hierzu eignen sich besonders Kugellager.

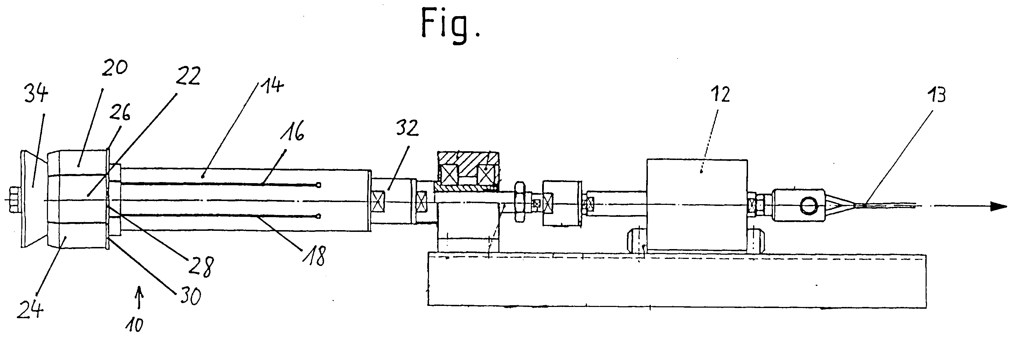

Im folgenden wird die Erfindung anhand des in der Zeichnung dargestellten Ausführungsbeispiels näher erläutert.

Die Figur zeigt eine Darstellung eines Ausführungsbeispiels einer erfindungsgemäßen Spannvorrichtung ohne Rohling.

Die Spannvorrichtung 10 ist vorzugsweise an einem Wagen 12 befestigt, wie er üblicherweise zum Ziehen von Rohlingen verwendet wird. Dieser Wagen kann beispielsweise, wie hier dargestellt, durch einen Seilzug 13 gezogen werden. Ebenso sind natürlich mechanische Antriebe, wie Zahnstangenantrieb oder Antrieb durch eine Schraubenspindel, möglich. Ebenso kann der Antrieb durch einen Hydraulikzylinder erfolgen.

Die eigentliche Spannvorrichtung 10 umfaßt einen Spannbackenträger 14, der einen wesentlich geringeren Durchmesser als der Innendurchmesser des Rohlings aufweist. Dieser Spannbackenträger 14 ist rohrförmig ausgebildet und wird durch Schlitze 16, 18, die sich von dem dem Rohling zugewandten Ende des Spannbackenträgers 14 bis fast zu dem entgegengesetzten Ende erstrecken, in einzelne Sektoren geteilt. Diese Sektoren tragen an dem dem Rohling zugewandten Ende die eigentlichen Spannbacken 20, 22, 24. Diese Spannbacken weisen im entspannten Zustand (wie dargestellt) einen etwas geringeren Durchmesser als der Rohling auf. Vorzugsweise ist ihre äußere Oberfläche der Innengestalt des Rohlings angepaßt. Bei den üblichen runden Rohlingen stellt die äußere Form also im wesentlichen die Mantelfläche eines Zylinders dar. Selbstverständlich können bei Verarbeitung polygonaler Rohlinge entsprechend abgewandelte Spannbacken Verwendung finden. Zum leichteren Einführen in den Rohling sind die Spannbacken 20, 22, 24 an ihrer dem Rohling zugewandten Seite leicht zulaufend ausgebildet.

Durch den Spannbackenträger 14 hindurch erstreckt sich eine Zugstange 32, die vorzugsweise ebenfalls rund ist, und einen etwas geringeren Durchmesser aufweist, als der Innendurchmesser des Spannbackenträgers 14. Diese Zugstange 32 läuft in einen Kegel 34 aus, dessen Spitze in Zugrichtung zeigt. Dieser Kegel 34 wirkt mit entsprechend konisch ausgebildeten Gegenflächen am rohlingseitigen Ende der Sektoren des Spannbackenträgers 14 dergestalt zusammen, daß diese Sektoren und damit die Spannbacken 20, 22, 24 bei Zug auf den Kegel 34 über die Zugstange 32 nach außen getrieben werden, bis sie mit einer entsprechenden Kraft an dem Rohling anliegen. Wird der Zug entlastet, wandert der Kegel 34 aufgrund der Federkraft der Sektoren des Spannbackenträgers 14 wieder entgegen der Zugrichtung und die Spannbacken lösen sich von der Innenseite des Rohlings.

Gemäß der vorliegenden Erfindung ist es nun möglich, den Rohling bis ans Ende zu bearbeiten. Selbst wenn sich durch die Bearbeitung (beispielsweise Ziehen oder Walzen bzw. Konifizieren) der Innendurchmesser des Rohlings etwas verringert, kann dies von der Spannvorrichtung kompensiert werden, ohne daß sich die Spannkraft verändert. Bei einer solchen Bearbeitung würde der Kegel 34 lediglich leicht in den Rohling hineinbewegt, wodurch die Spannbacken 20, 22, 24 näher zusammenrücken können.

Sofern der Rohling während der Bearbeitung oder zwischen den Bearbeitungsschritten gedreht werden soll, empfiehlt sich eine Kugellagerung zwischen der Zugstange 32 und dem Wagen 12.

Sämtliche aus der Beschreibung, den Ansprüchen und der Zeichnung hervorgehenden Merkmale und Vorteile der Erfindung, einschließlich konstruktiver Einzelheiten und räumlicher Anordnungen, können sowohl für sich als auch in beliebiger Kombination erfindungswesentlich sein.

## Patentansprüche

1. Spannvorrichtung für röhrenförmige Rohlinge, die mit einer Zugkraft beaufschlagt werden sollen, **dadurch gekennzeichnet**, daß sie Spannbacken (20, 22, 24) aufweist, die den röhrenförmigen Rohling von innen her festspannen, wobei die Spannbacken (20, 22, 24) mit einer entsprechenden Expandiervorrichtung verbunden wird.

2. Spannvorrichtung nach Anspruch 1, dadurch gekennzeichnet, daß die Spannbacken (20, 22, 24) auf einem Spannbackenträger (14) angeordnet sind, der durch in Axialrichtung verlaufende Schlitze (16, 18) in einzelne, an einem Ende verbundene Sektoren geteilt ist, die an dem anderen Ende die Spannbaken (20, 22, 24) tragen.

3. Spannvorrichtung nach Anspruch 2, dadurch gekennzeichnet, daß die Sektoren an dem Ende, an dem sie die Spannbacken (20, 22, 24) tragen, an ihrer Innenseite nach innen konisch zulaufend ausgebildet sind, und als Expandiervorrichtung ein Kegel (34) mit gleicher Konizität dient, der mit seiner Spitze mit der die Zugkraft erzeugenden Vorrichtung (13) in Verbindung steht, und dessen Spitze in dem zwischen den Sektoren gebildeten Hohlraum hineinragt.

4. Spannvorrichtung nach Anspruch 3, dadurch gekennzeichnet, daß der Spannbackenträger (14) drehbar und verschiebbar auf der Verbindung (32) zwischen dem Kegel (34) und der die Zugkraft erzeugenden Vorrichtung aufliegt.

5. Spannvorrichtung nach Anspruch 3 oder 4, dadurch gekennzeichnet, daß der Kegel (34) gegenüber der die Zugkraft erzeugenden Vorrichtung drehbar gelagert ist.

6. Spannvorrichtung nach Anspruch 5, dadurch gekennzeichnet, daß der Kegel (34) mittels Kugellagern gegenüber der Zugkraft erzeugenden Vorrichtung gelagert ist.

7. Spannvorrichtung nach einem der vorhergehenden Ansprüche, dadurch gekennzeichnet, daß die Spannbacken (20, 22, 24) an ihrer Mantelfläche mit Rillen versehen sind, die vorzugsweise einen sägezahnförmigen oder gewindeflankenförmigen Querschnitt aufweisen.
